Europäisches Patentamt

European Patent Office

Office européen des brevets

(19)

(11) Veröffentlichungsnummer: **0 254 755**
**B1**

(12) # EUROPÄISCHE PATENTSCHRIFT

(45) Veroffentlichungstag der Patentschrift:
31.05.89

(51) Int. Cl.⁴: **C09D 3/76, C08L 27/06**

(21) Anmeldenummer: 86110380.2

(22) Anmeldetag: 28.07.86

(54) Wärmehärtbares Organosol und dessen Verwendung.

(43) Veroffentlichungstag der Anmeidung:
03.02.88 Patentblatt 88/5

(45) Bekanntmachung des Hinweises auf die Patenterteilung:
31.05.89 Patentblatt 89/22

(84) Benannte Vertragsstaaten:
AT BE CH DE FR GB IT LI NL SE

(56) Entgegenhaltungen:
DE-A- 2 029 629
GB-A- 999 061
US-A- 3 513 115

(73) Patentinhaber: ICI Lacke Farben GmbH,
Postfach 940 Düsseldorfer Strasse 102,
D-4010 Hilden/Rhld.(DE)

(72) Erfinder: Falkenburg, Hans, Dr., Schumannstrasse 6,
D-5657 Haan (Rhld.)(DE)
Erfinder Petakovic, Branislav, Dipl.-Chem.,
Fröbelstrasse 19, D-5000 Köln 71 - Pesch(DE)

(74) Vertreter: Patentanwälte TER MEER - MÜLLER -
STEINMEISTER, Mauerkircherstrasse 45,
D-8000 München 80(DE)

**Beschreibung**

Gegenstand der Erfindung ist ein wärmehärtbares Organosol zur Bildung von festhaftenden, porenfreien und sterilisationsbeständigen Beschichtungen von insbesondere Metallen gemäß Obergriff des Hauptanspruchs sowie dessen Verwendung für Innenlackierung von Nahrungsmittelbehältern.

Weißblech, Feinstblech und Aluminiumblech für Verpackungen werden meist mit einer Lackierung versehen, welche die Aufgabe hat, den Kontakt des Füllgutes mit dem Verpackungswerkstoff zu vermindern oder auszuschalten. Einerseits soll die Verpackung das Füllgut nicht beeinträchtigen, andererseits sollen Korrosionen des Verpackungsmaterials durch das Füllgut vermieden werden. Derartige Lackierungen werden vor dem Herstellen der Verpackungen, wie Dosen und Behälter, im Walzlackierverfahren in geringen Schichtdicken aufgetragen. Dünne Lackierungen können porös und außerdem anfällig gegen Verkratzen beim Herstellen der Dosen und Behälter sein. Dickere Lackierungen besitzen andererseits den Nachteil einer schlechteren Verformbarkeit und führen häufig zu Lackaufbrüchen an Sicken und Prägestellen.

Es ist bekannt, Lackierungen mit geringer Porigkeit auf Basis von Polyvinylchlorid, beispielsweise bei der Getränkedosenlackierung, herzustellen. Aus Polyvinylchlorid bzw. Vinylchlorid-Mischpolymerisaten können jedoch nur Lösungen mit niedrigem Feststoffgehalt hergestellt werden, weil eine bestimmte Verarbeitungsviskosität nicht überschritten werden darf. Mit diesen niedrig konzentrierten Lacken lassen sich nur Filme mit geringer Schichtdicke herstellen.

Es ist andererseits bekannt, zum Überziehen von Kronenkorken Plastisole und Organosole auf Basis von Vinylharzen zu verwenden. Solche Organosole stellen Dispersionen von feinverteilten, festen Kunststoffen in flüssigen Weichmachern und organischen Verdünnungssystemen dar. Der Feststoffgehalt von Plastisolen und Organosolen ist hoch und liegt zwischen 60 und 100%. Bei Verwendung von bekannten Plastisolen und Organosolen erhält man jedoch Lackierungen mit geringer Haftung und Wasserbeständigkeit, besonders beim Kochen und Sterilisieren. Das Einsatzgebiet dieser Lackierungen ist daher äußerst beschränkt.

Bei den Kronenkorken tritt der Plastisol-Auftrag an die Stelle der früher üblichen elastischen Dichtungsscheibe zum gas- und flüssigkeitsdichten Verschließen der Flaschenmündung. Der Plastisol-Auftrag ist demzufolge auf den Bereich der Flaschenmündung bzw. des ebenen Verschlußbodens beschränkt. Bei ausgezeichnetem Dichtungsvermögen weisen die Plastisole jedoch ein äußerst geringes Haftvermögen auf, so daß sie sich nicht ohne zusätzliche Maßnahmen als Dichtungsmittel eignen, weil sich von dem glatten Verschlußboden ohne weiteres als geschlossener Film abziehen lassen. Um dem zu begegnen, ist es bekannt als Haftgrund ein Organosol zu verwenden. Dieses Organosol wird jedoch von dem als Dichtung fungierenden Plastisol überdeckt und kommt demzufolge mit dem Flaschenhals nicht in Berührung. Bekannt sind aus der GB-PS 11 05 620 auch spezielle Polyester aus zweiwertigen Alkoholen und Dicarbonsäuren als Weichmacher für Polyvinylchloridharze. Inwieweit damit weichgemachtes Polyvinylchlorid zusätzlich noch andere Harze enthalten kann oder darf, ist nicht bekannt.

In der US-PS 3 137 666 wird ein Verfahren zum Herstellen festhaftender Lackierungen auf Zinn-, Stahl- und Aluminiumblechen beschrieben, bei dem eine Organosol-Überzugsmasse mit einem Vinylchoridhomopolymer, einem Polyesterweichmacher und einem weiteren Harz aufgetragen wird. Hierbei handelt es sich um eine dekorative Lackierung mit beispielsweise texturiertem, gewelltem, lederartigem oder gehämmertem Aussehen. Die Lackierung braucht hinsichtlich ihrer Beständigkeit daher lediglich einer üblichen Außenbeanspruchung gewachsen zu sein.

Aus der DE-PS 20 29 629 ist die Verwendung eines Organosols, welches ein Vinylchlorid-Homopolymerisat, ein Phenolharz, ein Aminoplastharz, einen Polyester, ein Verdünnungsmittel, einen Katalysator, einen Polymerweichmacher und gegebenenfalls übliche Zusätze enthält, zur Herstellung einer festhaftenden, porenfreien und sterilisationsbeständigen Innenlackierung von Nahrungsmittelbehälter aus verzinntem, unbehandeltem oder oberflächenbehandeltem Feinstblech, Aluminium oder Aluminiumlegierungen bekannt. Aufgrund des zur Erzielung der notwendigen Flexibilität der Schicht notwendigen Polymerweichmachers, der zwangsläufig ein niedriges Molekulargewicht besitzen muß, ergeben sich Probleme dadurch, daß dieser Weichmacher beim Einbrennen, bei der Sterilisation und bei der Lagerung aus der Schicht austreten und sich in dem in der Verpackung vorliegenden Nahrungsmittel ansammeln kann. Daher sind die nach der Lehre dieses Standes der Technik erhältlichen Lackierungen verbesserungsbedürftig.

Weiterhin besteht der Wunsch, die eingesetzten Organosole hinsichtlich ihrer Haftfestigkeit auf dem metallischen Substrat, insbesondere beim Stanzen und/oder Schneiden beschichteter Bleche und hinsichtlich ihrer Beständigkeit gegen aggressive Füllgüter noch weiter zu verbessern. Darüber hinaus besteht ein Bedürfnis dafür, die Flexibilität, die Porendichtigkeit und die mechanische Wiederstandsfähigkeit der mit Hilfe der wärmehärtbaren Organosole gebildeten Überzugsschichten weiter zu steigern, so daß die damit beschichteten Bleche auch nach allen neueren Verarbeitungs- und Verformungsverfahren der Verpackungsmittelindustrie (Tiefziehen, Sikkenpressen, Bördeln, Ritzen und Schweißen usw.) eingesetzt damit neuen Verwendungsmöglichkeit mit technisch fortschrittlichen Aspekten zugeführt werden können. Weiterhin ist es aus Gründen des Umweltschutzes erwünscht, die Ausbildung von Innenbeschichtungen von Nahrungsmittelbehältern unter Einsatz von flüchtigen, organischen Verdünnungs- und/oder Lösungsmitteln zu verringern.

Die Aufgabe der vorliegenden Erfindung besteht somit darin, ein wärmehärtbares Organosol der eingangs angegebenen Gattung derart zu verbessern, daß eine Steigerung der Haftfestigkeit der damit ausgebildeten Überzugsschichten auf dem metallischen Untergrund, eine erhöhte Füllgutbeständigkeit während des Sterilisationsvorganges und während der Lagerung, eine wesentliche Erhöhung der Flexibilität und der Porendichtigkeit und insbesondere der mechanischen Beständigkeit bei der Blechverformung auch ohne den Einsatz eines niedrigmolekularen Weichmachers erreicht wird.

Diese Aufgabe wird gelöst durch die kennzeichnenden Merkmale des wärmehärtbaren Organosols gemäß Hauptanspruch.

Die Unteransprüche betreffen besonders bevorzugte Ausführungsformen dieses Erfindungsgegenstandes sowie die Verwendung dieses wärmehärtbaren Organosols zur Herstellung einer festhaftenden, porenfreien und sterilisationsbeständigen Innenlackierung von Nahrungsmittelbahältern aus verzinntem, unbehandeltem oder oberflächenbehandeltem Feinstblech, Aluminium oder Aluminiumlegierungen.

Es hat sich nun überraschenderweise gezeigt, daß mit dem erfindungsgemäßen Organosol transparente, gut verlaufende und porenfreie Beschichtungen hergestellt werden können, die bei höchster Flexibilität ein unerwartet hohes Maß an Sterilisations- und Füllgutbeständigkeit aufweisen. Darüber hinaus konnte nicht damit gerechnet werden, daß Schutzlackfilme mit dieser Korrosionsfestigkeit sich auch vorzüglich als Haftlack für PVC-Dichtungen für Gläser- und sonstige Verschlüsse aller Art eignen würden.

Besonders unerwartet ist jedoch die Tatsache, daß sich mit dem erfindungsgemäßen Organosol erstmalig ein weichmacherfreies Organosol auf Polyvinylchlorid-Basis herstellen läßt, bei welchem die bisher üblichen Polyvinylchlorid-Weichmacher bzw. der gemäß der DE-PS 20 29 629 eingesetzte niedrigmolekulare Polyester-Polymerweichmacher durch ein hochmolekulares Polyesterharz ersetzt werden konnte, welches in Verbindung mit den übrigen Harzbestandteilen des Organosols eine besonders hohe Polyvinylchlorid-Verträglichkeit aufweist, wodurch homogene und stabile Lackfilme mit den für einen Schutzlack besonders begehrten Eigenschaften erhalten werden können.

Die mit Hilfe des erfindungsgemäßen wärmehärtbaren Organosols gebildeten festhaftenden Beschichtungen sind nicht nur sterilisations- und nahrungsmittelbeständig sondern sind in überraschend starkem Maße außerordentlich starken Verformungen beim Einbringen einer Aufreiß- bzw. Ritzlinie gewachsen und zeigen eine wesentliche Erhöhung der Porendichtigkeit. Demzufolge eignen sich diese wärmehärtbaren Organosole ins-besondere für die Innenlackierung von Nahrungs-mittelbehältern, wie beispielsweise Konservendosen, die einen Niet im Deckel oder Rumpf eine Ritzlinie besitzen, längs derer sich die Verpackung aufreißen läßt. Derartige Niete und Ritzlinien sind infolge der starken Kaltverformung des Bleches in besonderem Maße korrosionsgefährdet.

Das erfindungsgemäße wärmehärtbare Organosol enthält als in dispergierter Form vorliegendes Vinylchlorid-Homopolymerisat vorzugsweise ein feinkörniges, neutrales Homopolymerisat mit einem K-Wert (nach H. Fikentscher entsprechend DIN 53726) von 68 bis 90, vorzugsweise von 70 bis 80, und einer Viskositätszahl (ebenfalls nach DIN 53726) zwischen 115 und 230. Besonders bevorzugt sind feinkörnige, neutrale, in Pasten überführbare, emulgatorfreie Vinylchlorid-Homopolymerisate mit besonders niedriger Viskosität und besonders hoher Lagerbeständigkeit, welche nichtpigmentierten Lackfilmen hohe Klarheit verleihen.

Neben dem Vinylchlorid-Homopolymerisat enthält das erfindungsgemäße Organosol als wesentliche Bestandteile 5 bis 15 Gew.-% eines Phenolharzes, 1 bis 15 Gew.-% eines Epoxidharzes und 4 bis 20 Gew.-% eines linearen Polyesters auf der Grundlage von aromatischen und/oder cyclischen Dicarbonsäuren. Erfindungsgemäß besonders gut geeignete Phenolharze sind wärmehärtbare, nicht plastifizierte, mit Epoxidharzen und Vinylchlorid-Homopolymerisate gut verträgliche Phenol-Formaldehyd-Resolharze und insbesondere veretherte Kresol-Formaldehyd-Harze.

Als Epoxidharz enthält das erfindungsgemäße Organosol vorzugsweise ein Epoxidharz mit einem zahlenmittleren Molekulargewicht von 300 bis 900 und einem entsprechenden Epoxid-Äquivalentgewicht von 150 bis 500.

Besonders bevorzugt sind Reaktionsprodukte aus Epichlorhydrin und Bisphenol A, wie sie beispielsweise in dem "Handbook of Epoxy Resins", herausgegeben von H. Lee und K. Neville, McGraw-Hill Book Company, New York (1967) beschrieben sind.

Der erfindungsgemäß eingesetzte lineare Polyester auf der Grundlage von aromatischen und/oder cyclischen Dicarbonsäuren ist vorzugsweise ein linearer, hydroxylgruppenhaltiger, gesättiger Co-Polyester auf der Grundlage von Phthalsäure, Isophthalsäure, Terephthalsäure, Cyclohexandicarbonsäure, Hexahydrophthalsäure, Hexahydroisophthalsäure und/oder Hexahydroterephthalsäure und aliphatischen und/oder cyclischen Diolen oder auf der Grundlage von p-Hydroxybenzoesäure. Als aliphatisches und/oder cyclisches Diol enthält dieser Polyester vorzugsweise 1,2-Propylenglykol, 1,3-Propylenglykol, 1,2-Butylenglykol, 1,3-Butylenglykol, 1,4-Butylenglykol, 2,2-Dimethyl-1,3-propandiol, 2-Ethyl-2-methyl-1,3-propandiol, 1,6-Hexamethylenglykol, 1,2-Bis(hydroxy-methyl)-cyclohexan, 1,3-Bis(hydroxymethyl)-cyclohexan, 1,4-Bis(hydroxymethyl)-cyclohexan, Bis(hydroxymethyl)-tricyclodecan, 4,4'-Dihydroxydiphenylether und/oder 4,4'-Dihydroxydiphenyl.

Dieser Polyester besitzt ein Molekulargewicht von 10 000 bis 24 000, von 14 000 bis 22 000, und eine durch Differential-Thermoanalyse bestimmte Glasübergangstemperatur im Bereich von 60 bis 80°C und vorzugsweise von etwa 70°C. Das Molekulargewicht der erfindungsgemäß eingesetzten linearen Polyester liegt damit deutlich oberhalb desjenigen der Polyester, die als Polymerweichmacher nach der Lehre der DE-PS 20 29 629 eingesetzt werden. Das Molekulargewicht dieser Polymerweichmacher liegt in der Regel unterhalb 8 000 und im allgemeinen jedoch zwischen 400 und 4 000. Gerade angesichts dieses deutlich höheren Molekulargewichts der erfindungsgemäß eingesetzten linearen Polyester überrascht die Stabilität der Organosole und die Flexibilität der damit erhaltenen Beschichtungen.

Als Verdünnungsmittel und/oder Lösungsmittel enthält das erfindungsgemäße Organosol einen aromatischen Kohlenwasserstoff, gegebenenfalls in Mischung mit Terpenkohlenwasserstoffen, Alkoholen und/oder Ketonen. Dabei werden die Lösungs- bzw. Verdünnungsmittel vorzugsweise derart aufeinander abgestimmt, daß ein übermäßiges Quellen des Vinylchlorid-Polymerisats vermieden wird.

Zur Beschleunigung der Polykondensation der eingesetzten Harze und zur Verbesserung der Haftung an dem Substrat wird vorzugsweise ein saurer Katalysator verwendet. Als Katalysatoren eignen sich insbesondere Ameisensäure, Essigsäure, Milchsäure, Weinsäure, Citronensäure, Salicylsäure, Phthalsäure, Phoshorsäure und deren Ester, p-Toluolsulfonsäure, Dodecylbenzolsulfonsäure, Dinonylnaphthalindisulfonsäure, Ester der Titansäure wie Butyltitanat oder Isopropyltitanat, sowie auch Chelate, wie Titanacetylacetonat.

Neben den oben genannten wesentlichen Bestandteilen können die Organosole der Erfindung übliche Zusätze, wie Gleitmittel, Stabilisatoren, Farbstoffe, Füllstoffe, Pigmente, wie beispielsweise Titandioxid oder Aluminiumschuppenpigmente, und sonstige Lackhilfsmittel enthalten.

Gemäß einer weiteren Ausführungsform der Erfindung enthält das wärmehärtbare Organosol als zusätzlichen Bestandteil 0,1 bis 10 Gew.-% eines Aminoplastharzes, insbesondere eines Triazinharzes und/oder eines Benzoguanaminharzes. Durch diesen Zusatz wird eine überraschende weitere Steigerung der Haftung des ausgebildeten Überzuges auf metallischen Untergründen bei gleichzeitiger Erhöhung der Härte der Lackschicht erreicht.

Einer weiteren bevorzugten Ausführungsform der Erfindung zufolge enthält das wärmehärtbare Organosol zusätzlich 0,5 bis 10 Gew.-% eines Vinylchlorid-Mischpolymerisats in Form einer Lösung. Hierdurch läßt sich die Steigerung der Haftung der Zwischenschicht bei Ausbildung von Zweischichtsystemen auf metallischen Substraten erreichen. Als Vinylchlorid-Mischpolymerisate werden bei dieser Ausführungsform der Erfindung vorzugsweise Vinylchlorid/Vinylacetat/Maleinsäure-Mischpolymerisate oder Vinylchlorid/Vinylacetat/Vinylalkohol-Mischpolymerisate, die in Form einer Lösung dem übrigen Bestandteil enthaltenden, fertiggestellten Organosol zugesetzt werden, eingesetzt. Besonders bevorzugt ist ein Mischpolymerisat aus 81 Gew.-% Vinylchlorid, 17 Gew.-% Vinylacetat und 2 Gew.-% Maleinsäure (Vinylite VMCA der Firma Union Carbide Corporation).

Aufgrund ihrer besonderen Zusammensetzung eignen sich die erfindungsgemäßen wärmehärtbaren Organosole insbesondere zur Erzeugung von porenfreien Lackierungen auf Feinstblech, wie den in der Feinstblechverpackungsindustrie üblichen Materialien, namentlich verzinntem, unbehandeltem und oberflächenbehandeltem Feinstblech, Aluminium und Aluminiumlegierungen. Da die mit Hilfe des erfindungsgemäßen Organosols erzeugte Lackierung kochfest ist, können vorteilhaft Dosen und Behälter für Nahrungsmittel, insbesondere Konservendosen und -deckel lackiert werden. Zu diesem Zweck können die Überzugsmassen entweder einschichtig oder mehrschichtig oder als Grundlack bzw. als Überzugslack in Kombination mit einem Lack anderer Zusammensetzung, vorzugsweise einem Lack auf Epoxidharzbasis, zur Herstellung von Innenbeschichungen für Nahrungsmittelbehälter verwendet werden. Gegenstand der Erfindung ist daher auch die Verwendung des Organosols nach Anspruch 14.

Die erfindungsgemäßen Organosole werden insbesondere in Schichtdicken von 7 bis 30 g (Trockengewicht) pro Quadratmeter auf die Bleche aufgetragen., aber auch dünnere Lackierungen sind möglich. Dabei können die für die Tafellackierung üblicherweise angewandten Vorrichtungen und Trockenöfen eingesetzt werden. Die Trocknungszeit beträgt vorzugsweise 8 bis 15 Minuten bei Trocknungstemperaturen von 170 bis 225°C. Das erfindungsgemäße Organosol kann auch mit Hilfe anderer Methoden, wie durch Gießen oder Spritzen oder mit Hilfe eines Bandlackierverfahrens aufgebracht werden. Die Lackierungen können, wie bereits angegeben wurde, als Grundierungen eingesetzt werden oder auch nachträglich mit einer weiteren Überzugsschicht versehen werden.

Die mit den erfindungsgemäßen wärmehärtbaren Organosolen erzeugten Lackierungen überstehen eine Sterilisation in unterschiedlichen Testlösungen, wie Wasser, 3 %-iger Kochsalzlösung, 3%-iger Essigsäurelösung, 2 %-iger Weinsäurelösung und 1 %-iger Milchsäurelösung ohne Wasseraufnahme und ohne Verlust der Haftung.

Ein besonderer Vorteil der mit Hilfe der erfindungsgemäßen Organosole erzeugten Beschichtungen ist darin zu sehen, daß sie eine sehr geringe Porigkeit und eine sehr große Beständigkeit gegen mechanische Beanspruchungen zeigen. Solche Beanspruchungen treten insbesondere beim Anbringen von Ritzlinien und Nieten auf, die ein bequemes Öffnen der Dose von Hand ermöglichen. Fast alle bisher bekannten Innenlackierungen werden bei diesen Behandlungen beschädigt, so daß an diesen Stellen eine bevorzugte Korrosion auftritt, die entweder hingenommen oder durch nachträgliche Lackierung verhindert wird. Aufgrund der besonderen Zusammensetzung des erfindungsgemäß wärmehärtbaren Organosols ergeben sich somit Lackierungen, die besonders korrosionsbeständig, sterilisationsbeständig und mechanisch stabil sind und sich damit in herausragendem Maße für die Innenbeschichtung von Feinstblech-Verpackungsmaterialien mit Aufreißdeckeln aus insbesondere Aluminium, Aluminiumlegierungen oder Stahl-Feinstblech eignen.

Die folgenden Beispiele und das Vergleichsbeispiel dienen der weiteren Erläuterung der Erfindung.

Beispiele

In den folgenden Beispielen werden die nachstehend angegebenen Rohstoffe verwendet:

Vinylchlorid-Homopolymerisat

Handelsübliches, pulverförmiges Vinylchlorid-Homopolymerisat mit einem K-Wert von 70;

Vinylchlorid-Mischpolymerisat

Lösung eines handelsüblichen Vinylchlorid-Mischpolymerisats auf der Grundlage von VC/VAc/Maleinsäure in einem Keton/Lösungsmittelgemisch. Die Mengenangaben sind auf die Feststoffanteile des Vinylchlorid-Mischpolymerisats bezogen;

Phenolharz

Handelsübliche, butanolisierte, nichtplastifizierte Kresolformaldehyd-Resolharz-Lösung in Alkohol. Die Mengenangaben sind auf die Feststoffanteile der Phenolharzlösung bezogen;

Epoxidharz

Handelsübliches flüssiges Epoxidharz mit einem Epoxid-Äquivalentgewicht von 190;

Polyesterharz

Handelsübliches, lineares, gesättigtes Polyesterharz mit einer Glasübergangstemperatur von 70°C;

Aminoplastharz

Handelsübliche Lösung von Benzoguanaminharz in Alkohol. Die Mengenangaben sind auf die Feststoffanteile der Aminoplastharz-Lösung bezogen;

Katalysator A

50%-ige Lösung von Phosphorsäure (85%) in Alkohol;

Katalysator B

10%-ige Lösung einer handelsüblichen Sulfonsäure in Alkohol;

Katalysator C

15%-ige Lösung von Butyltitanat polymer in Butylglykol;

Katalysator D

75%-ige Lösung eines handelsüblichen Titanchelats in Alkohol;

Gleitmittel

45%-ige Dispersion eines synthetischen Wachses in einem aromatischen Kohlenwasserstoffgemisch als Verdünnungsmittel;

Aluminium-Schuppenpigment

Handelsübliche Aluminiumpaste bestehend aus 65 Gewichtsteilen eines feinteiligen Aluminiumschuppenpigments und 35 Gewichtsteilen eines Kohlenwasserstoffgemisches;

Verdünnungsmittelgemisch

Mischung aus folgenden Komponenten:-

| Aromatische Kohlenwasserstoffe | 83,40 Gew.-% |
|---|---|
| Alkohole | 8,30 Gew.-% |
| Ketone | 2,80 Gew.-% |
| Glykolester | 5,50 Gew.-% |
| | 100,00 Gew.-% |

Beispiel 1

Man bereitet durch Vermischen der angegebenen Bestandteile ein Organosol mit folgender Zusammensetzung:-

| Vinylchlorid-Homopolymerisat | 35,00 Gew.-% |
|---|---|
| Phenolharz | 4,00 Gew.-% |
| Epoxidharz | 8,00 Gew.-% |
| Polyesterharz | 10,00 Gew.-% |
| Katalysator A | 0,20 Gew.-% |
| Katalysator C | 0,10 Gew.-% |
| Gleitmittel | 0,50 Gew.-% |
| Vedünnungsmittelgemisch | 42,20 Gew.-% |
| | 100,00 Gew.-% |

Beispiel 2

Man bereitet durch Vermischen der angegebenen Bestandteile ein Organosol mit folgender Zusammensetzung:-

| Vinylchlorid-Homopolymerisat | 31,50 Gew.-% |
|---|---|
| Phenolharz | 6,50 Gew.-% |
| Epoxidharz | 7,20 Gew.-% |
| Polyesterharz | 9,00 Gew.-% |
| Aminoplastharz | 2,70 Gew.-% |
| Katalysator A | 0,20 Gew.-% |
| Katalysator B | 0,10 Gew.-% |
| Katalysator C | 0,10 Gew.-% |
| Katalysator D | 0,20 Gew.-% |
| Gleitmittel | 0,50 Gew.-% |
| Verdünnungsmittelgemisch | 42,00 Gew.-% |
| | 100,00 Gew.-% |

Beispiel 3

Man bereitet durch Vermischen der angegebenen Bestandteile ein Organosol mit folgender Zusammensetzung:-

| | |
|---|---|
| Vinylchlorid-Homopolymerisat | 30,00 Gew.-% |
| Vinylchlorid-Mischpolymerisat | 3,00 Gew.-% |
| Phenolharz | 3,50 Gew.-% |
| Epoxidharz | 7,00 Gew.-% |
| Polyesterharz | 8,70 Gew.-% |
| Katalysator A | 0,20 Gew.-% |
| Katalysator C | 0,10 Gew.-% |
| Gleitmittel | 0,50 Gew.-% |
| Verdünnungsmittelgemisch | 47,00 Gew.-% |
| | 100,00 Gew.-% |

Beispiel 4

Man bereitet durch Vermischen der angegebenen Bestandteile ein Organosol mit folgender Zusammensetzung:-

| | |
|---|---|
| Vinylchlorid-Homopolymerisat | 31,00 Gew.-% |
| Vinylchlorid-Mischpolymerisat | 1,50 Gew.-% |
| Phenolharz | 5,00 Gew.-% |
| Epoxidharz | 7,00 Gew.-% |
| Polyesterharz | 9,00 Gew.-% |
| Aminoplastharz | 1,50 Gew.-% |
| Katalysator A | 0,20 Gew.-% |
| Katalysator B | 0,05 Gew.-% |
| Katalysator C | 0,10 Gew.-% |
| Katalysator D | 0,10 Gew.-% |
| Gleitmittel | 0,50 Gew.-% |
| Verdünnungsmittelgemisch | 44,05 Gew.-% |
| | 100,00 Gew.-% |

Beispiel 5

Man bereitet durch Vermischen der angegebenen Bestandteile ein Organosol mit folgender Zusammensetzung:-

| | |
|---|---|
| Vinylchlorid-Homopolymerisat | 29,00 Gew.-% |
| Phenolharz | 6,00 Gew.-% |
| Epoxidharz | 6,50 Gew.-% |
| Polyesterharz | 8,50 Gew.-% |
| Aminoplastharz | 2,50 Gew.-% |
| Katalysator A | 0,20 Gew.-% |
| Katalysator B | 0,10 Gew.-% |
| Katalysator C | 0,10 Gew.-% |
| Katalysator D | 0,10 Gew.-% |
| Gleitmittel | 0,50 Gew.-% |
| Aluminium-Schuppenpigment | 5,00 Gew.-% |
| Verdünnungsmittelgemisch | 41,50 Gew.-% |
| | 100,00 Gew.-% |

Vergleichsbeispiel

Als Vergleichsbeispiel dient das Beispiel der DE-PS 20 29 629 welches ein Organosol der folgenden Zusammensetzung beschreibt:-

| | |
|---|---|
| Vinylchlorid-Homopolymerisat | 45,00 Gew.-% |
| Polyesterweichmacher (Adipinsäure-Polyester mit einem mittleren Molekulargewicht von 1100) | 9,00 Gew.-% |
| Phenolharz | 9,00 Gew.-% |
| Aminoplastharz | 8,00 Gew.-% |
| Säurekatalysator | 0,10 Gew.-% |
| Hitzestabilisator | 2,00 Gew.-% |
| Verdünnungsmittelgemisch | 27,90 Gew.-% |
| | 100,00 Gew.-% |

Mit den Organosolen der obigen Beispiele wurden Substrate der folgenden Art:-

Substrat I:-Weissblech, Passivierung 311 ("Andralyt")(*)
Substrat II:-E.C.C.S.(Electrolytic Chromium Coated Steel) ("Ancrolyt") (*)
(*) Die Bezeichnungen "Andralyt" und "Ancrolyt" sind Warenzeichen der Rasselstein AG, Neuwied
im Walzlackierverfahren beschichtet und 12 Minuten bei 210°C eingebrannt. Die Trocken-Schichtdicke betrug 10 g/m².
Mit den beschichteten Substraten I und II wurden folgende Prüfungen durch geführt:-

(A) Sterilisationsprüfung 121°C/30 Minuten

Unter Verwendung folgender Lebensmittelsimulanzien:-

(i) Wasser
(ii) 3%-ige Essigsäurelösung
(iii) 2%-ige Milchsäurelösung
(iv) 2%-ige Weinsäurelösung

Bewertet wird die Wasseraufnahme und die Blasenbildung.

8

(B) Sterilisationsprüfung 121°C/60 Minuten

Nur mit Wasser als Lebensmittelsimulanz.
Bewertet wird die Wasseraufnahme und die Blasenbildung.

(C) Sterilisationsprüfung 129°C/60 Minuten

Nur mit Wasser als Lebensmittelsimulanz.
Bewertet wird die Wasseraufnahme und die Blasenbildung.

(D) Flexibilitätsprüfung

Durchführung mit dem Schlagfallprüfgerät von Erichsen Model 471 (Schlagkeilbiegetest).
Bewertet wird die Beschädigung der Lackbeschichtung entlang der Biegung.

(E) Schweißhitzebeständigkeit

Das beschichtete Metallsubstrat wird im Heissluftstrom auf eine Objekttemperatur von 255°C für die Dauer von 10 Sekunden gebracht. (Prüfung nur auf Substrat I).
Bewertet wird die Verfärbung und die Zerstörung des Lackfilms.
Die Prüfergebnisse sind in den folgenden Tabellen I und II zusammengefaßt.

**Tabelle I. Prüfergebnisse mit Substrat I**

| Prüfungen | Beispiele | | | | | |
|---|---|---|---|---|---|---|
| | 1 | 2 | 3 | 4 | 5 | Vergleichsbeispie· |
| (A) Sterilisationsprüfung 121°C/30 min | | | | | | |
| i Wasser | 1 | 1 | 1–2 | 1 | 1 | 2 |
| ii 3% Essigsäure | 1 | 1 | 1–2 | 1 | 1 | 3 |
| iii 2% Milchsäure | 1 | 1 | 1 | 1 | 1 | 3 |
| iv 2% Weinsäure | 1 | 1 | 1 | 1 | 1 | 3 |
| (B) Sterilisationsprüfung 121°C/60 min Wasser | 1 | 1 | 1–2 | 1 | 1 | 4 |
| (C) Sterilisationsprüfung 129°C/60 min Wasser | 1–2 | 1 | 1–2 | 1 | 1 | 4 |
| (D) Flexibilitätsprüfung (Schlagkeilbiegetest) | 1 | 2 | 1 | 2 | 2 | 3 |
| (E) Schweißhitzebeständigkeit | 2 | 3 | 2 | 3 | 1 | 3 |
| Bewertung: 1 = sehr gut, 2 = gut, 3 = befriedigend, 4 = ausreichend, 5 = mangelhaft | | | | | | |

**Tabelle II. Prüfergebnisse mit Substrat II**

| Prüfungen | Beispiele | | | | | |
|---|---|---|---|---|---|---|
| | 1 | 2 | 3 | 4 | 5 | Vergleichsbeispiel |
| (A) Sterilisationsprüfung 121°C/30 min | | | | | | |
| i Wasser | 1 | 1 | 1 | 1 | 1 | 2 |
| ii 3% Essigsäure | 3 | 2 | 3 | 2 | 1 | 5 |
| iii 2% Milchsäure | 2 | 1 | 2–3 | 2 | 1 | 3 |
| iv 2% Weinsäure | 1 | 1 | 1 | 1 | 1 | 2–3 |
| (B) Sterilisationsprüfung 121°C/60 min Wasser | 1 | 1 | 1 | 1 | 1 | 3 |
| (C) Sterilisationsprüfung 129°C/60 min Wasser | 1 | 1 | 1 | 1 | 1 | 3 |
| (D) Flexibilitätsprüfung (Schlagkeilbiegetest) | 1 | 2 | 1 | 2 | 1 | 1 |
| Bewertung: 1 = sehr gut, 2 = gut, 3 = befriedigend, 4 = ausreichend, 5 = mangelhaft | | | | | | |

EP 0 254 755 B1

**Patentansprüche**

1. Wärmehärtbares Organosol zur Bildung von festhaftenden, porenfreien und sterilisationsbeständigen Beschichtungen enthaltend ein Vinylchlorid-Homopolymerisat, ein Phenolharz, einen Polyester, ein Verdünnungsmittel, einen Katalysator und gegebenenfalls übliche Zusätze, **dadurch gekennzeichnet, daß es**
   a) 20 bis 50 Gew.-% des Vinylchlorid-Homopolymerisats,
   b) 1 bis 15 Gew.-% des Phenolharzes,
   c) 1 bis 15 Gew.-% eines Epoxidharzes,
   d) 4 bis 20 Gew.-% eines linearen Polyesters auf der Grundlage von aromatischen und/oder cyclischen Dicarbonsäuren und
   e) 25 bis 60 Gew.-% des Verdünnungsmittels enthält.

2. Organosol nach Anspruch 1 dadurch gekennzeichnet, daß es als Vinylchlorid-Homopolymerisat ein feinkörniges, neutrales Homopolymerisat mit einem K-Wert von 68 bis 90 und einer Viskositätszahl von 115 bis 230 enthält.

3. Organosol nach Anspruch 1, dadurch gekennzeichnet, daß es als Phenolharz ein wärmehärtbares, nichtplastifiziertes, mit Epoxidharzen und Vinylchlorid-Homopolymerisaten gut verträgliches Phenol-Formaldehyd-Resolharz, vorzugsweise ein verethertes Kresol-Formaldehyd-Harz enthält.

4. Organosol nach Anspruch 1, dadurch gekennzeichnet, daß es als Epoxidharz ein Epoxidharz mit einem zahlenmittleren Molekulargewicht von 300 bis 900 und einem entsprechenden Epoxid-Äquivalentgewicht von 150 bis 500 enthält.

5. Organosol nach Anspruch 1, dadurch gekennzeichnet, daß es als linearen Polyester einen hydroxylgruppenhaltigen, thermoplastischen, gesättigten Co-Polyester auf der Grundlage von Phthalsäure, Isophthalsäure, Terephthalsäure, Cyclohexandicarbonsäure, Hexahydrophthalsäure, Hexahydroisophthalsäure und/oder Hexahydroterephthalsäure und aliphatischen und/oder cyclischen Diolen oder auf der Grundlage von p-Hydroxybenzoesäure enthält.

6. Organosol nach Anspruch 5 dadurch gekennzeichnet, daß der Polyester als aliphatisches und/oder cyclisches Diol 1,2-Propylenglykol, 1,3-Propylenglykol, 1,2-Butylenglykol, 1,3-Butylenglykol, 1,4-Butylenglykol, 2,2-Dimethyl-1,3--propandiol, 2-Ethyl-2-methyl-1,3-propandiol, 1,6-Hexamethylenglykol, 1,2-Bis (hydroxymethyl)-cyclohexan, 1,3-Bis(hydroxymethyl)-cyclohexan, 1,4-Bis(hydroxymethyl)-cyclohexan, Bis(hydroxy-methyl)-tricyclodecan, 4,4'-Dihydroxydiphenylether und/oder 4,4'-Dihydroxydiphenyl umfaßt.

7. Organosol nach den Ansprüchen 5 und 6, dadurch gekennzeichnet, das der Polyester ein Molekulargewicht von 10 000 bis 24 000 und eine Glasübergangstemperatur von 60 bis 80°C aufweist.

8. Organosol nach den Anspruch 1 dadurch gekennzeichnet, daß es als Verdünnungsmittel mindestens einen aromatischen Kohlenwasserstoff, gegebenenfalls in Mischung mit Terpenkohlenwasserstoffen, Alkoholen und/oder Ketonen enthält.

9. Organosol nach den Anspruch 1 dadurch gekennzeichnet, daß es als Katalysator mindestens einen Vertreter der Ameisensäure, Essigsäure, Milchsäure, Weinsäure, Citronensäure, Salicylsäure, Phthalsäure, Phosphorsäure oder deren Ester, p-Toluolsulfonsäure, Dodecylbenzolsulfonsäure, Dinonylnaphthalindisulfonsäure, Ester der Titansäure, wie Butyltitanat oder Isopropyltitanat und/oder Chelate, wie Titanacetylacetonat, umfassenden Gruppe enthält.

10. Organosol nach mindestens einem der vorhergehenden Ansprüche, dadurch gekennzeichnet, daß es zusätzlich 0,1 bis 10 Gew.-% eines Aminoplastharzes enthält.

11. Organosol nach den Anspruch 10, dadurch gekennzeichnet, daß es als Aminoplastharz ein Benzoguanaminharz und/oder ein Triazinharz enthält.

12. Organosol nach mindestens einem der vorhergehenden Ansprüche, dadurch gekennzeichnet, daß es zusätzlich 0,5 bis 10 Gew.-% eines Vinylchlorid-Mischpolymerisats in Form einer Lösung enthält.

13. Organosol nach den Anspruch 12, dadurch gekennzeichnet, daß es als Vinylchlorid-Mischpolymerisat ein Vinylchlorid/Vinylacetat/Maleinsäure-Mischpolymerisat oder ein Vinylchlorid/Vinylacetat/Vinylalkohol-Mischpolymerisat enthält.

14. Verwendung des Organosols nach den Ansprüchen 1 bis 13 zur Herstellung einer festhaftenden, porenfreien und sterilisationsbeständigen Innenlackierung von Nahrungsmittelbehältern aus verzinntem, unbehandeltem oder oberflächenbehandeltem Feinstblech, Aluminium oder Aluminiumlegierungen.

**Claims**

1. Heat-curable organosol for forming firmly adhering, pore-free and sterilization-resistant coatings, containing a vinyl chloride homopolymer, a phenolic resin, a polyester, a diluent, a catalyst and, if appropriate, conventional additives, characterized in that it contains
   a) 20 to 50% by weight of the vinyl chloride homopolymer,
   b) 1 to 15% by weight of the phenolic resin,
   c) 1 to 15% by weight of an epoxide resin,
   d) 4 to 20% by weight of a linear polyester based on aromatic and/or cyclic dicarboxylic acids and
   e) 25 to 60% by weight of the diluent.

·

EP 0 254 755 B1

2. Organosol according to Claim 1, characterized in that it contains, as the vinyl chloride homopolymer, a fine-grain, neutral homopolymer having a K value of 68 to 90 and a viscosity number of 115 to 230.

3. Organosol according to Claim 1, characterized in that it contains, as the phenolic resin, a heat-curable, unplasticized phenol/formaldehyde resol resin of good compatibility with epoxide resins and vinyl chloride homopolymers, preferably an etherified cresol/formaldehyde resin.

4. Organosol according to Claim 1, characterized in that it contains, as the epoxide resin, an epoxide resin having a number average molecular weight of 300 to 900 and a corresponding epoxide equivalent weight of 150 to 500.

5. Organosol according to Claim 1, characterized in that it contains, as the linear polyester, a thermoplastic saturated copolyester containing hydroxyl groups and based on phthalic acid, isophthalic acid, terephthalic acid, cyclohexanedicarboxylic acid, hexahydrophthalic acid, hexahydroisophthalic acid and/or hexahydroterephthalic acid and aliphatic and/or cyclic diols, or based on p-hydroxybenzoic acid.

6. Organosol according to Claim 5, characterized in that the polyester comprises, as the aliphatic and/or cyclic diol, 1,2-propylene glycol, 1,3-propylene glycol, 1,2-butylene glycol, 1,3-butylene glycol, 1,4-butylene glycol, 2,2-dimethyl-1,3-propanediol, 2-ethyl-2-methyl-1,3-propanediol, 1,6-hexamethylene glycol, 1,2-bis-(hydroxymethyl)-cyclohexane, 1,3-bis-(hydroxymethyl)-cyclohexane, 1,4-bis-(hydroxymethyl)-cyclohexane, bis-(hydroxymethyl)-tricyclodecane, 4,4'-dihydroxydiphenyl ether and/or 3,4'-dihydroxydiphenyl.

7. Organosol according to Claims 5 and 6, characterized in that the polyester has a molecular weight of 10,000 to 24,000 and a glass transition point of 60 to 80°C.

8. Organosol according to Claim 1, characterized in that it contains, as the diluent, at least one aromatic hydrocarbon, if appropriate as a mixture with terpene hydrocarbons, alcohols and/or ketones.

9. Organosol according to Claim 1, characterized in that it contains, as the catalyst, at least one representative from the group comprising formic acid, acetic acid, lactic acid, tartaric acid, citric acid, salicylic acid, phthalic acid, phosphoric acid or its esters, p-toluene-sulphonic acid, dodecylbenzenesulphonic acid, dinonylnaphthalenedisulphonic acid, esters of titanic acid such as butyl titanate or isopropyl titanate and/or chelates such as titanium acetylacetonate.

10. Organosol according to at least one of the preceding Claims, characterized in that it additionally contains 0.1 to 10% by weight of an aminoplast resin.

11. Organosol according to Claim 10, characterized in that it contains, as the aminoplast resin, a benzoguanamine resin and/or triazine resin.

12. Organosol according to at least one of the preceding Claims, characterized in that it additionally contains 0.5 to 10% by weight of a vinyl chloride copolymer in the form of a solution.

13. Organosol according to Claim 12, characterized in that it contains, as the vinyl chloride copolymer, a vinyl chloride/vinyl acetate/maleic acid copolymer or a vinyl chloride/vinyl acetate/vinyl alcohol copolymer.

14. Use of the organosol according to Claims 1 to 13 for producing a firmly adhering, pore-free and sterilization-resistant internal coating on foodstuff containers of tin-plated, untreated or surface-treated black plate, aluminium or aluminium alloys.

**Revendications**

1. Organosol thermodurcissable pour la formation de revêtements adhérant solidement, exempts de pores et résistant à la stérilisation, organosol contenant un homopolymère de chlorure de vinyle, une résine phénolique, un polyester, un diluant, un catalyseur et éventuellement des additifs usuels, caractérisé en ce qu'il contient

a) de 20 à 50% en poids de l'homopolymère de chlorure de vinyle,
b) de 1 à 15% en poids de la résine phénolique,
c) de 1 à 15% en poids d'une résine époxy,
d) de 4 à 20% en poids d'un polyester linéaire à base d'acides dicarboxyliques aromatiques et/ou cycliques, et
e) de 25 à 60% en poids du diluant.

2. Organosol selon la revendication 1, caractérisé en ce qu'il contient, en tant qu'homopolymère de chlorure de vinyle, un homopolymère neutre à grains fins, ayant un indice K de 68 à 90 et un indice de viscosité de 115 à 230.

3. Organosol selon la revendication 1, caractérisé en ce qu'il contient, en tant que résine phénolique, une résine phénol-formaldéhyde-résol thermodurcissable, non plastifiée, ayant une bonne compatibilité avec les résines époxy et les homopolymères de chlorure de vinyle, de préférence une résine crésol-formaldéhyde éthérifiée.

4. Organosol selon la revendication 1, caractérisé en ce qu'il contient, en tant que résine époxy, une résine époxy ayant une masse moléculaire moyenne en nombre de 300 à 900, et un poids correspondant en équivalent époxyde de 150 à 500.

5. Organosol selon la revendication 1, caractérisé en ce qu'il contient, en tant que polyester linéaire, un copolyester saturé thermoplastique, contenant des groupes hydroxy, à base d'acide phtalique, acide isophtalique, acide téréphtalique, acide cyclohexanedicarboxylique, acide hexahydrophtalique, acide hexahydroisophtalique et/ou acide hexahydrotéréphtalique, et de diols aliphatiques et/ou cycliques, ou à base d'acide p-hydroxybenzoïque.

6. Organosol selon la revendication 5, caractérisé en ce que le polyester comprend, en tant que diol aliphatique et/ou cyclique, du 1,2-propylèneglycol, 1,3-propylèneglycol, 1,2-butylèneglycol, 1,3-butylèneglycol, 1,4-butylèneglycol, 2,2-diméthyl-1,3-propanediol, 2-éthyl-2-méthyl-1,3-propanediol, 1,6-hexamé-thylèneglycol 1,2-bis(hydroxyméthyl)-cyclohexane, 1,3-bis(hydroxyméthyl)-cyclohexane, 1,4-bis(hydroxyméthyl)-cyclohexane, bis(hydroxyméthyl)-tricyclodécane, de l'éther 4,4'-dihydroxydiphényli-que et/ou du 4,4'-dihydroxydiphényle.

7. Organosol selon les revendications 5 et 6, caractérisé en ce que le polyester présente une masse moléculaire de 10 000 à 24 000 et une température de transition vitreuse de 60 à 80°C.

8. Organosol selon la revendication 1, caractérisé en ce qu'il contient, en tant que diluant, au moins un hydrocarbure aromatique, éventuellement en mélange avec des hydrocarbures de type terpène, des alcools et/ou des cétones.

9. Organosol selon la revendication 1, caractérisé en ce qu'il contient, en tant que catalyseur, au moins un représentant du groupe comprenant l'acide formique, l'acide acétique, l'acide lactique, l'acide tartrique, l'acide citrique, l'acide salicylique, l'acide phtalique, l'acide phosphorique ou ses esters, l'acide p-toluènesulfonique, l'acide dodécylbenzènesulfonqiue, l'acide dinonylnaphtalènedisulfonique, des esters de l'acide titanique tels que le titanate de butyle ou le titanate d'isopropyle, et/ou des chélates tels que l'acétylacétonate de titane.

10. Organosol selon au moins une des revendications précédentes, caractérisé en ce qu'il contient en outre de 0,1 à 10% en poids d'une résine aminoplaste.

11. Organosol selon la revendication 10, caractérisé en ce qu'il contient, en tant que résine aminoplaste, une résine benzoguanamine et/ou une résine triazine.

12. Organosol selon au moins une des revendications précédentes, caractérisé en ce qu'il contient en outre de 0,5 à 10% en poids d'un copolymère de chlorure de vinyle, sous forme d'une solution.

13. Organosol selon la revendication 12, caractérisé en ce qu'il contient, en tant que copolymère de chlorure de vinyle, un copolymère chlorure de vinyle/acétate de vinyle/acide maléique ou un copolymère chlorure de vinyle/acétate de vinyle/alcool vinylique.

14. Utilisation de l'organosol selon les revendications 1 à 13, pour la production d'une couche interne de vernis exempte de pores, adhérant solidement et résistant à la stérilisation, sur des contenants de produits alimentaires en tôle très mince étamée, non traitée ou traitée en surface, aluminium ou alliages d'aluminium.